(19) Europäisches Patentamt
European Patent Office
Office européen des brevets

(11) **EP 2 837 508 B1**

(12) **EUROPEAN PATENT SPECIFICATION**

(45) Date of publication and mention
of the grant of the patent:
**31.05.2017 Bulletin 2017/22**

(51) Int Cl.:
***B60C 5/14*** *(2006.01)*       ***C08L 21/00*** *(2006.01)*
***C08L 101/00*** *(2006.01)*       ***B60C 1/00*** *(2006.01)*

(21) Application number: **13775077.4**

(86) International application number:
**PCT/JP2013/056979**

(22) Date of filing: **13.03.2013**

(87) International publication number:
**WO 2013/153897 (17.10.2013 Gazette 2013/42)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.04.2012 JP 2012088328**

(43) Date of publication of application:
**18.02.2015 Bulletin 2015/08**

(73) Proprietor: **The Yokohama Rubber Co., Ltd.
Minato-ku
Tokyo 105-8685 (JP)**

(72) Inventors:
• **HASHIMURA, Yoshiaki**
  **Hiratsuka-shi,**
  **Kanagawa 254-8601 (JP)**
• **SETO, Hideki**
  **Hiratsuka-shi,**
  **Kanagawa 254-8601 (JP)**
• **MATSUDA, Jun**
  **Hiratsuka-shi,**
  **Kanagawa 254-8601 (JP)**

(74) Representative: **Dilg, Haeusler, Schindelmann
Patentanwaltsgesellschaft mbH
Leonrodstrasse 58
80636 München (DE)**

(56) References cited:
**JP-A- H1 016 082       JP-A- 2008 149 609
JP-A- 2008 308 007**

**Description**

TECHNICAL FIELD

The present invention relates to a pneumatic tire.

More specifically, the present invention relates to a pneumatic tire that is formed by using a resin film sheet in which a thermoplastic elastomer composition including a thermoplastic resin or a blend of a thermoplastic resin and an elastomer is made into a sheet shape, forming the sheet into a cylindrical shape by connecting end portions of the sheet by an overlap splice method, subjecting the sheet to vulcanization molding, and using the sheet as an inner liner layer or a reinforcing layer, wherein the pneumatic tire has excellent moldability and durability without generating a crack near a connecting portion of the resin film sheet during a molding process of the pneumatic tire and after starting running of the pneumatic tire.

BACKGROUND

A proposal has been made and being considered to use a film sheet configured from a thermoplastic resin as an inner liner, a reinforcing layer, or the like of a pneumatic tire (Patent Document 1).

In order to use this film sheet configured from the thermoplastic resin as the inner liner or a member for the reinforcing layer of the pneumatic tire, normally, the film sheet is incorporated into a green tire as a sheet material made into a cylindrical shape by joining, at a joining portion, end portions of a single film sheet or a plurality of the film sheets on each other and, further, tire molding is performed by subjection to a vulcanization molding process of the tire.

However, a rigidity of the joining portion that overlaps the film sheet configured from the thermoplastic resin is large compared to a portion of the film sheet in a periphery thereof, and there is therefore a problem where a crack is generated near a splice portion at a molding time (lifting time) of the tire and after starting running due to a rigidity difference from the peripheral portion.

Because of this, in Patent Document 1, it is proposed that a rigidity reduction processing portion for eliminating a difference between the rigidity of the joining portion and the rigidity of another portion of the resin film layer be provided at the joining portion of the resin film layer, and it is specifically proposed that the rigidity reduction processing portion be provided on at least one film sheet, the rigidity reduction processing portion be holes or slits formed on a joining surface, and, preferably, these holes be provided in positions that do not overlap each other (Patent Document 1 [Scope of patent claims, par. 0026 and the like]).

However, providing the holes or the slits on the thermoplastic resin film sheet specifically proposed in Patent Document 1 locally or wholly weakens a joining strength of the film sheet; this invites molding defects by generating local uneven stretching and inter-layer peeling at the molding time (lifting time) of the tire or prevents an expected performance from being exhibited by generating peeling of the film sheet after starting running and has problems in durability.

PRIOR ART DOCUMENT

Patent Document

Patent Document 1: Japanese Unexamined Patent Application Publication No. 2008-308007

SUMMARY OF THE INVENTION

Problems To Be Solved By The Invention

In view of the above, an object of the present invention is to provide a pneumatic tire that is formed by using a resin film sheet in which a thermoplastic elastomer composition including a thermoplastic resin or a blend of a thermoplastic resin and an elastomer is made into a sheet shape, forming the sheet into a cylindrical shape by connecting end portions of the sheet by an overlap splice method, subjecting the sheet to vulcanization molding, and using the sheet as an inner liner layer or a reinforcing layer, wherein the pneumatic tire has excellent moldability and durability without generating a crack near a connecting portion of the resin film sheet during a molding process of the pneumatic tire and after starting running of the pneumatic tire.

Means To Solve The Problems

A pneumatic tire of the present invention that achieves the object above has a configuration of (1) below.

(1) A pneumatic tire that uses a thermoplastic elastomer composition including a thermoplastic resin or a blend of a thermoplastic resin and an elastomer as a resin film sheet material by making the thermoplastic elastomer composition into a sheet shape, the pneumatic tire having an overlap splice portion joined by overlapping the film sheet materials on each other, at least one layer of two layers joined by overlapping the film sheet materials in the overlap splice portion having recessed portions of a depth D ($\mu$m) that is smaller than a thickness T ($\mu$m) of the film sheet material on a non-joining surface side thereof, and joining surface sides of the two layers being formed into flat surfaces and the flat surfaces are joined.

Furthermore, it is preferable that this pneumatic tire of the present invention is configured from any of configurations (2) to (5) below.

(2) The pneumatic tire according to (1) above, wherein the depth D ($\mu$m) of the recessed portions and the thickness T ($\mu$m) of the film sheet material are in a relation of formula (a) below:

$$0.01\ T \leq D < 1.0\ T...\ \ Formula\ (a)$$

(3) The pneumatic tire according to (1) or (2) above, wherein a surface area S (cm$^2$) of the overlap splice portion joined by overlapping the film sheet materials on each other and a total surface area A (cm$^2$) of the recessed portions on one surface are in a relation of formula (b) below:

$$0.01\ S \leq A \leq 1.0\ S...\ \ Formula\ (b)$$

(4) The pneumatic tire according to any of (1) to (3) above, wherein the recessed portions are formed by a laser light irradiation process.

(5) The pneumatic tire according to any of (1) to (4) above, wherein the resin film sheet material forms an inner liner.

According to the present invention as in claim 1, a pneumatic tire can be obtained that is formed by using a resin film sheet in which a thermoplastic elastomer composition including a thermoplastic resin or a blend of a thermoplastic resin and an elastomer is made into a sheet shape, forming the sheet into a cylindrical shape by connecting end portions of the sheet by an overlap splice method, subjecting the sheet to vulcanization molding, and using the sheet as an inner liner layer or a reinforcing layer, wherein the pneumatic tire has excellent moldability and durability without generating a crack near a connecting portion of the resin film sheet during a molding process of the pneumatic tire and after starting running of the pneumatic tire.

In particular, because the rigidity difference can be reduced and joining surfaces of the sheets that are joined by overlap splicing each other are formed by the flat surfaces, a joining strength is large; this does not invite molding defects by generating local uneven stretching and inter-layer peeling at a molding time (lifting time) of the tire or induce peeling of the film sheet after starting running, and an expected performance can be favorably exhibited over a long period.

According to the pneumatic tire of the present invention as in any of claims 2 to 3, a pneumatic tire can be obtained, wherein the pneumatic tire has higher effects and reliably has the effects of the present invention as in claim 1.

According to the pneumatic tire of the present invention as in claim 4, a pneumatic tire can be obtained, wherein the pneumatic tire has favorable workability and reliably has the effects of the present invention as in claim 1.

According to the pneumatic tire of the present invention as in claim 5, a pneumatic tire having the inner liner layer formed from the resin film sheet can be obtained, wherein the pneumatic tire has a performance that excels in a light-weight property and an air permeation prevention property and has excellent durability without generating a crack or peeling near a connecting portion of the inner liner layer after starting running of the pneumatic tire.

BRIEF DESCRIPTION OF THE DRAWINGS

FIGS. 1A and 1B are each a side view illustrating as a model an example of an embodiment near an overlap splice portion of a resin film sheet in a pneumatic tire according to the present invention.

FIGS. 2A, 2B, and 2C are each a perspective view illustrating as a model an example of an embodiment near the splice portion of the resin film sheet in the pneumatic tire according to the present invention.

FIG. 3 is a partially fragmented perspective view illustrating an example of an embodiment of the pneumatic tire according to the present invention.

FIG. 4 is a cross-sectional view in a tire meridian direction that describes an example of the pneumatic tire according to the present invention; this in a situation where the resin film sheet is used as an inner liner layer, and a location where it is preferable to provide a splice portion that, in particular, has recessed portions where an overlap splice portion S of the resin film sheets is present across an entire width in a tire width direction is illustrated as a model.

FIGS. 5A, 5B, and 5C are each a cross-sectional view in the tire meridian direction that describes an example of the pneumatic tire according to the present invention, illustrating as a model a preferable disposition position when disposing the resin film sheet according to the present invention on an inner portion or a top surface portion of the tire.

BEST MODE FOR CARRYING OUT THE INVENTION

A detailed explanation of the pneumatic tire of the present invention will be given below.

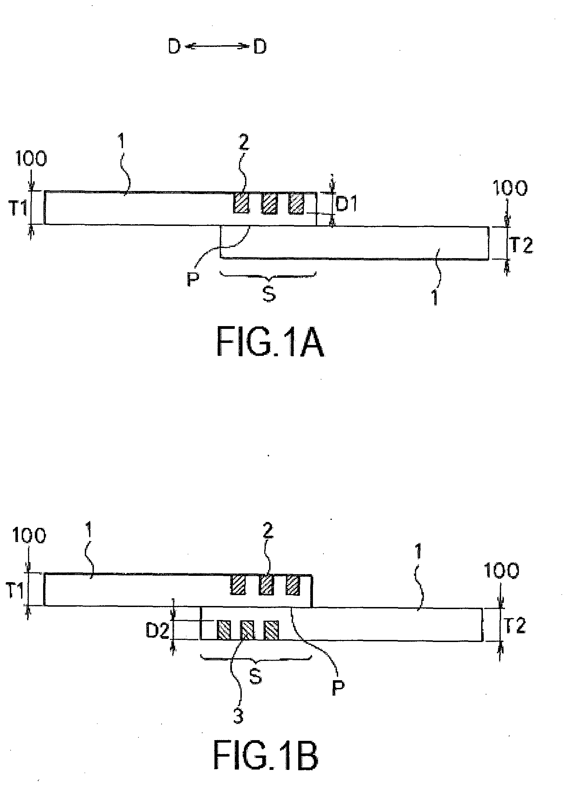

The pneumatic tire of the present invention is a pneumatic tire such as illustrated in FIG. 1 that uses a resin film sheet material 1, which makes a thermoplastic elastomer composition that includes a thermoplastic resin or a blend of a thermoplastic resin and an elastomer into a sheet shape, as a member that forms the tire, having an overlap splice portion joined by overlapping the film sheet materials 1 on each other, where at least one layer of two layers joined by overlapping the film sheet materials 1 in an overlap splice portion S has recessed portions 2 of a depth D ($\mu$m) that is smaller than a thickness T ($\mu$m) of the film sheet material 1 on a non-joining surface side that is not a joining surface P side thereof, and the joining surface P sides of the two layers are formed into flat surfaces and the flat surfaces are joined.

According to this pneumatic tire of the present invention, a rigidity difference near the overlap splice portion can be reduced by the presence of the recessed portions 2, and by this, during a molding process of the pneumatic tire or after starting running of the pneumatic tire, a crack is not generated near the splice portion S of the resin film sheet materials 1, and a pneumatic tire with excellent moldability and durability can be obtained. In particular, because the rigidity difference can be reduced as described above and joining surfaces P of the sheets that are joined by overlap splicing each other are formed by the flat surfaces, a joining strength is large; this does not invite molding defects by generating local uneven stretching and inter-layer peeling at a molding time (lifting time) of the tire or induce peeling of the film sheet after starting running, and an expected performance can be favorably exhibited over a long period.

The recessed portions are favorable if provided on at least one end portion of two layers of a resin sheet 2 that are overlap spliced, may be provided on the film sheet on a tire lumen side (2 in FIG. 1A) or provided on the film sheet on a tire outer periphery side (3 in FIG. 1B), or may be provided on both of the two layers (FIG. 1B). If providing on both of the two layers, with the present invention, it does not matter whether positions of the recessed portions overlap by being overlap spliced. This is because the joining strength can be maintained high because the joining surfaces themselves are the flat surfaces for both the two layers. However, it should be noted that depending on the depth or a form of the recessed portions, there are situations where it is best to avoid overlapping the positions of the recessed portions. In FIG. 1, the arrow D direction is a tire circumferential direction.

Providing the recessed portions 2, 3 in a form penetrating the film sheets 1 on which they are provided should be avoided by all means for both of the two layers; while reduction of rigidity can be achieved if they are formed as through-holes, doing so invites generation of local unevenness in the joining strength, invites the molding defects by generating local uneven stretching and inter-layer peeling at the molding time (lifting time) of the tire, and also invites peeling of the film sheet after starting running, and the effects of the present invention are unable to be obtained.

In the present invention, "joined by overlapping the film sheet materials 1 on each other" refers to a form where the film sheet materials 1 of the two layers are joined directly to each other without interposing a rubber layer such as a tie rubber layer therebetween; in this form, end portions of a single or a plurality of the film sheet materials 1 are joined by an overlap splice method to configure one cylindrical shape. In this form, because the rubber layer or the like is not present between the film sheet materials 1, a rigidity difference from a peripheral portion directly emerges and becomes a problem. "Joining" may be thermal joining using a thermal characteristic of the thermoplastic resin if the thermoplastic resin is used or may be joining using a suitable adhesive.

As illustrated in FIG. 1, the depth D ($\mu$m) of the recessed portions is preferably in a relation of formula (a) below with the thickness T ($\mu$m) of the film sheet material in maintaining both the reduction of rigidity and the joining strength. According to various findings of the present inventors, more preferably, a relation of D = 0.10T to 0.80T is satisfied, and still more preferably, a relation of D = 0.20T to 0.70T is satisfied.

$$0.01T \leq D < 1.0T... \quad \text{Formula (a)}$$

The depth D ($\mu$m) of the recessed portions above may be continuously changed in a range of formula (a) above if the depth D ($\mu$m) satisfies formula (a) above.

Furthermore, a surface area S (cm$^2$) of the overlap splice portion where the film sheet materials 1 are joined by being overlapped on each other and a total surface area A (cm$^2$) of the recessed portions on one surface are preferably in a relation of formula (b) below. That is, the recessed portions may be formed by a total surface area of the overlap splice portion. According to various findings by the present inventors, more preferably, a relation of A = 0.20S to 0.90S is satisfied, and still more preferably, a relation of A = 0.30S to 0.70S is satisfied.

$$0.01S \leq A \leq 1.0S... \quad \text{Formula (b)}$$

Forming the recessed portions 2, 3 is preferably by a processing method that irradiates a laser light on the film sheet material 1 from a vertical direction thereof while moving in a surface direction of the film sheet material. Irradiation of the laser light may be performed continuously while moving or may be performed intermittently while moving.

In particular, because the depth (D) of the recessed portions that are formed can be adjusted by adjusting a movement speed and a strength of laser light irradiation, the processing method that irradiates the laser light is most suited to manufacturing the film sheet material used in the present invention. It is preferable to use an infrared laser or a $CO_2$ (carbon dioxide gas) laser as the laser light, and among these, using the $CO_2$ (carbon dioxide gas) laser is preferable in favorability of workability, controllability, and the like. While it seems to be depending on a material of the film sheet material, a YAG laser is inferior to those above in terms of workability, controllability, and the like.

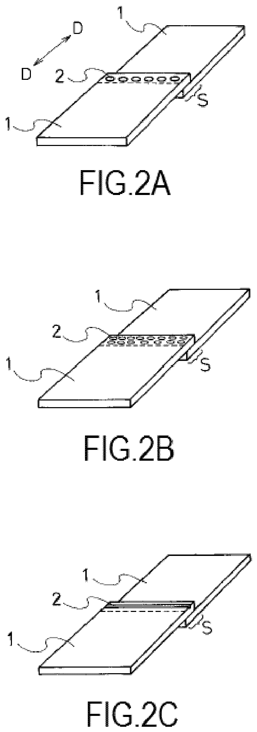

FIGS. 2A to 2C are each a perspective view illustrating as a model an embodiment of the recessed portions near the splice portion of the resin film sheet that can be adopted by the present invention; FIG. 2A illustrates a form where the recessed portions are lined up in a row in dots of a circular shape along an extending direction of the overlap splice portion (tire width direction), FIG. 2B illustrates a form where the recessed portions are lined up in two rows in slits in a dotted-line shape, and FIG. 2C illustrates a form where the recessed portions form a row in a continuous line shape, but the present invention is not limited to these in particular and other forms besides these can be adopted. For example, one or a plurality of recessed portions of a waveform curve shape such as a sine curve or of a straight line shape can be provided continuously or in dots along a length in a tire circumferential direction of the overlap splice portion.

The thickness of the film sheet material 1 used in the present invention is not limited in particular but is generally from 20 $\mu$m to 500 $\mu$m and preferably from 30 $\mu$m to 300 $\mu$m; the processing method by laser light irradiation is suited to forming recesses with favorable processing precision on such a thin resin film sheet.

The film sheet material described above is used as an inner liner layer of the pneumatic tire or a reinforcing sheet layer for reinforcing a particular portion.

In the present invention, if using the resin film sheet described above as the inner liner layer (air permeation prevention layer), it is favorable to provide the resin film sheet in a position where it would be disposed as a normal inner liner layer. Moreover, in this situation, the resin film sheet described above may be used as a reinforcing layer for the inner liner layer.

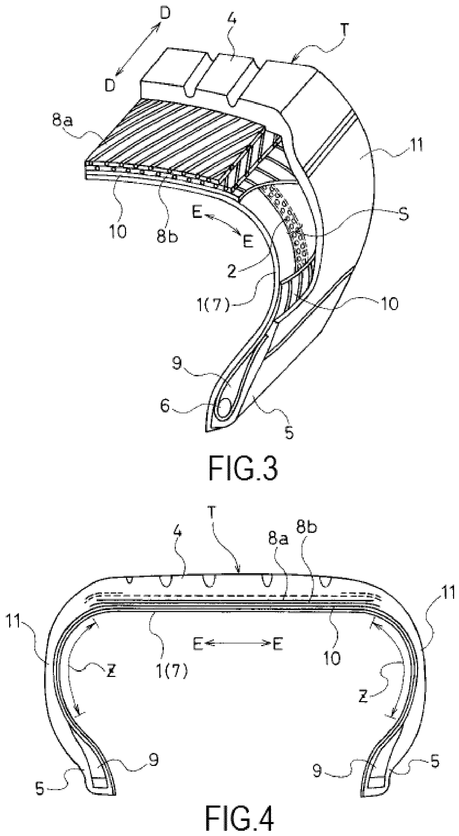

FIG. 3 illustrates as a model a structure where the resin film sheet is used as the inner liner layer; a pneumatic tire T is provided so as to concatenate a sidewall portion 11 and a bead portion 5 on the left and right of a tread portion 4. On a tire inner side thereof, a carcass layer 10 that is a framework of the tire is provided so as to span a region between the bead portions 5, 5 on the left and right in the tire width direction. 6 is a bead core, and 9 is a bead filler. Two belt layers 8a, 8b configured from steel cords are provided on an outer circumferential side of the carcass layer 10 corresponding to the tread portion 4. As in FIGS. 1 and 2, the arrow D illustrates the tire circumferential direction, and the arrow E illustrates the tire width direction. An inner liner layer 7 configured from the resin film sheet 1 is disposed on an inner side of the carcass layer 10, and the overlap splice portion S thereof is present extending in the tire width direction. The overlap splice portion S has the recessed portions 2. Recesses of the recessed portions 2 remain in a recessed form when on the lumen side; meanwhile, when on a tire outer circumferential side, a rubber or the like that forms a peripheral member such as the tie rubber layer, a tire carcass, or the like is entered therein.

With a form used as the reinforcing layer, the splice portion S due to overlap may be present across an entire width of the tire, and the recessed portions 2 may be provided across an entire width of this splice portion, but this is not necessarily needed, and the splice portion S preferably extends in the tire width direction in a region at least "from an end portion of the belt layer 8b that forms a belt maximum width to a tip portion of the bead filler 9" as illustrated by Z in FIG. 4. In particular, deformation is great during running near a shoulder portion and near the sidewall portion 11, and because of this, the crack or peeling is more likely to be generated near the splice portion, and it is effective and desirable to provide the recessed portions 2 in region Z described above. Particularly preferable is to provide the recessed portions 2 in a region spanning from the region Z on one side to the region Z on an opposite side (omitting, however, the bead portion), and the recessed portions 2 may be appropriately installed in only the Z region, a center region (tread region) interposed by the Z regions, or in both of these regions, as desired.

When the resin film sheet is used as this reinforcing layer, the resin film sheet may be provided on an inner portion of the tire, for example, a portion adjacent to the reinforcing layer, such as the carcass layer or the belt layer, or another rubber layer, or may be used on a tire top surface portion (both an outer side top surface and a lumen side top surface) such as the bead portion, the side portion, or the tread portion.

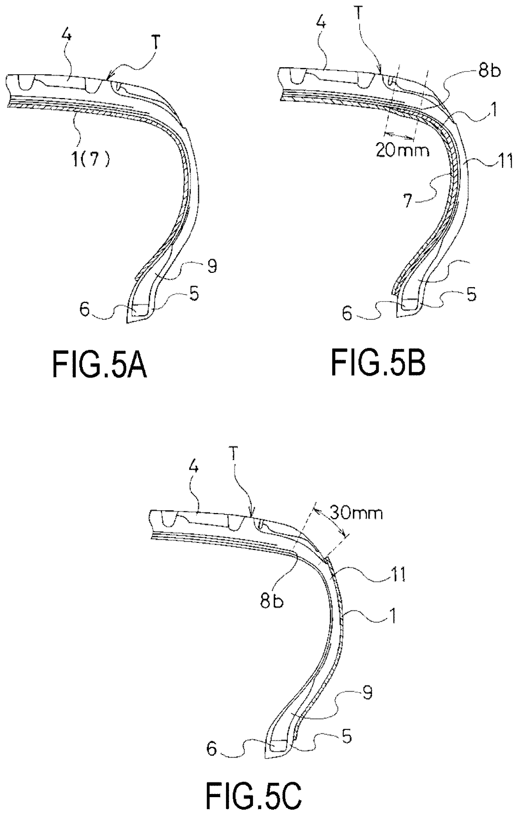

FIGS. 5A to 5C illustrate embodiments of various uses thereof; FIG. 5A illustrates an example where the resin film sheet 1 is disposed on a tire inner surface, in particular, an example where the resin film sheet 1 is disposed from a position approximately 40 mm to the tire outer circumferential side from a bead toe tip, across a tire equator, and to a position approximately 40 mm to the tire outer circumferential side from the bead toe tip on the opposite side. 5 illustrates the bead portion, and 6 illustrates the bead core.

FIG. 5B is an example where the resin film sheet 1 is disposed on the tire inner portion and illustrates an example where the sheet 1 is disposed on a tire circumferential side of the inner liner 7 from a position 20 mm to a center side from a maximum width of a belt end 8, through the shoulder portion and the sidewall portion 11, and to an upper end of the bead core 6. In this situation, the inner liner 7 may be a resin film sheet configured from butyl rubber or, as is referred to in the present invention, the thermoplastic elastomer composition that includes the thermoplastic resin or the blend of the thermoplastic resin and the elastomer.

FIG. 5C is an example where the resin film sheet 1 is disposed on a tire outer surface and illustrates an example where the resin film sheet 1 is disposed from a position 30 mm to a bead portion 5 side from an end of the maximum width of the belt 8b, through the shoulder portion and the sidewall portion 11, and to the upper end of the bead core 6.

In the present invention, as described above, the thickness of the sheet is preferably from 20 to 500 $\mu$m. In particular, from a viewpoint of use, when the sheet is used as the reinforcing sheet, the thickness is preferably from 50 to 300 $\mu$m; meanwhile, when the sheet is used as the sheet configuring the inner liner layer, the thickness is preferably from 30 to 300 $\mu$m.

The thermoplastic resin and elastomer that can be used in the present invention will be described below.

The thermoplastic resin to be used in the present invention is preferably a polyamide resin, [e.g., nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6 (MXD6), nylon 6T, nylon 9T, nylon 6/6T copolymer, nylon 66/PP copolymer, nylon 66/PPS copolymer] and an N-alkoxyalkyl compound thereof, e.g., a methoxymethyl compound of nylon 6, a methoxymethyl compound of a nylon 6/610 copolymer, or a methoxymethyl compound of nylon 612; a polyester resin [e.g., an aromatic polyester such as polybutylene terephthalate (PBT), polyethylene terephthalate (PET), polyethylene isophthalate (PEI), a PET/PEI copolymer, polyarylate (PAR), polybutylene naphthalate (PBN), a crystal polyester, a polyoxyalkylene diimide acid/polybutylene terephthalate copolymer]; a polynitrile resin [e.g., polyacrylonitrile (PAN), polymethacrylonitrile, an acrylonitrile/styrene copolymer (AS), a (meta)acrylonitrile/styrene copolymer, a (meta)acrylonitrile/styrene/butadiene copolymer], a polymethacrylate resin [e.g., polymethyl-methacrylate (PMMA), polyethyl-methacrylic acid] , a polyvinyl resin [e.g., vinyl acetate, a polyvinyl alcohol (PVA), a vinyl alcohol/ethylene copolymer (EVOH), polyvinylidene chloride (PDVC), polyvinylchloride (PVC), a vinyl chloride/vinylidene chloride copolymer, a vinylidene chloride/methylacrylate copolymer, a vinylidene chloride/acrylonitrile copolymer (ETFE)], a cellulose resin [e.g., cellulose acetate, cellulose acetate butyrate], a fluoride resin [e.g., polyvinylidene difluoride (PVDF), polyvinyl fluoride (PVF), polychlorofluoroethylene (PCTFE), a tetrafluoroethylene/ethylene copolymer], or an imide resin [e.g., an aromatic polyimide (PI)].

Furthermore, with the thermoplastic resin and the elastomer that configure the thermoplastic elastomer composition that can be used in the present invention, the above may be used as the thermoplastic resin. The elastomer to be used desirably includes a diene-based rubber and a hydrogenate thereof [e.g., natural rubber (NR), isoprene rubber (IR), epoxidized natural rubber, styrene butadiene rubber (SBR), butadiene rubber (BR, high cis-BR, low cis-BR), nitrile rubber (NBR), hydrogenated NBR, hydrogenated SBR], an olefin rubber [e.g., ethylene propylene rubber (EPDM, EPM), maleic acid ethylene propylene rubber (M-EPM), butyl rubber (IIR), an isobutylene and aromatic vinyl or diene-based monomer copolymer, acrylic rubber (ACM), an ionomer], a halogen-containing rubber [e.g., Br-IIR, Cl-IIR, a brominated isobutylene-p-methylstyrene copolymer (BIMS), chloroprene rubber (CR), a hydrin rubber (CHR), chlorosulfonated polyethylene rubber (CSM), chlorinated polyethylene rubber (CM), chlorinated polyethylene rubber modified with maleic acid (M-CM)], a silicon rubber [e.g., methyl vinyl silicon rubber, dimethyl silicon rubber, methylphenyl vinyl silicon rubber], a sulfur-containing rubber [e.g., polysulfide rubber], a fluororubber [e.g., a vinylidene fluoride rubber, a vinyl ether rubber containing fluoride, a tetrafluoroethylene-propylene rubber, a silicon-based rubber containing fluoride, a phosphazene rubber containing fluoride], and a thermoplastic elastomer [e.g., a styrene elastomer, an olefin elastomer, an ester elastomer, a urethane elastomer, a polyamide elastomer].

In particular, 50% by weight or more of the elastomer is preferably halogenated butyl rubber, brominated isobutylene-p-methylstyrene copolymer rubber, or maleic anhydride modified ethylene $\alpha$-olefin copolymer rubber in being able to increase a rubber volume ratio and soften and ruggedize from a low temperature to a high temperature.

Furthermore, 50% by weight or more of the thermoplastic resin in the thermoplastic elastomer composition is preferably nylon 11, nylon 12, nylon 6, nylon 6, nylon 66, a nylon 6/66 copolymer, a nylon 6/12 copolymer, a nylon 6/10 copolymer, a nylon 4/6 copolymer, a nylon 6/66/12 copolymer, an aromatic nylon, or an ethylene / vinyl alcohol copolymer in being able to achieve both air permeation prevention and durability.

Furthermore, when obtaining the blend by blending a combination of the specified thermoplastic resin described above and the specified elastomer described above, in a situation where compatibilities differ, both the thermoplastic resin and the elastomer can be made compatible by using an appropriate compatibility agent as a third component. By mixing the compatibility agent in the blend, interfacial tension between the thermoplastic resin and the elastomer is reduced, and as a result, the particle diameter of the elastomer that forms the dispersion layer becomes very small and thus the characteristics of both components may be realized effectively. This type of compatibility agent may generally have a structure of a copolymer having a structure of one or both of the thermoplastic resin and the elastomer, or a copolymer having an epoxy group, a carbonyl group, a halogen group, an amino group, an oxazoline group, and/or a hydroxy group or the like that is able to react with the thermoplastic resin or the elastomer. While the type of compatibility agent may be selected according to the type of thermoplastic resin and elastomer to be blended, such a compatibility agent generally includes: a styrene/ethylene butylene block copolymer (SEBS) or a maleic acid modified compound thereof; a EPDM, EPM, EPDM/styrene or EPDM/acrylonitrile graft copolymer or a maleic acid modified compound thereof; a styrene/maleic acid copolymer, or a reactive phenoxy, and the like. The blending quantity of such a compatibility agent, while not being limited, is preferably from 0.5 to 10 parts by weight per 100 parts by weight of the polymer component (total of the thermoplastic resin and the elastomer).

In the thermoplastic elastomer composition where the thermoplastic resin and the elastomer are blended, a composition ratio between the specified thermoplastic resin and elastomer is not limited in particular, is favorable if suitably decided so as to assume a structure where the elastomer is disposed as a discontinuous phase in a matrix of the thermoplastic resin, and a preferable range is a weight ratio of 90/10 to 30/70.

In the present invention, another polymer such as the compatibility agent can be mixed in with the thermoplastic elastomer composition that includes the thermoplastic resin or the blend that blends the thermoplastic resin and the elastomer in a range that the characteristics required for the inner liner or the reinforcing layer are not harmed. Objects of mixing in the other polymer are improving compatibility between the thermoplastic resin and the elastomer, making molding workability of the material favorable, improving heat resistance, reducing costs, and the like, and as a material used for these objects, for example, polyethylene (PE), polypropylene (PP), polystyrene (PS), ABS, SBS, polycarbonate (PC), and the like can be illustrated. Furthermore, a reinforcing agent such as a filler (calcium carbonate, titanium oxide, alumina), carbon black, or white carbon, a softening agent, a plasticizer, a processing aid, a pigment, a dye, or an anti-aging agent generally compounded with polymer compounds may be optionally compounded so long as the characteristics required for an inner liner are not harmed. The thermoplastic elastomer composition assumes the structure where the elastomer is dispersed as the discontinuous phase in the matrix of the thermoplastic resin. By assuming this structure, a sufficient flexibility and, by an effect of a resin layer as a continuous phase, sufficient air permeation prevention can be imparted to the inner liner, and during molding, independent of an amount of the elastomer, molding workability equivalent to the thermoplastic resin can be obtained.

Furthermore, the elastomer can be dynamically vulcanized when being mixed in with the thermoplastic resin. A vulcanizer, a vulcanization assistant, vulcanization conditions (temperature, time), and the like, during the dynamic vulcanization can be determined as appropriate in accordance with the composition of the elastomer to be added, and are not particularly limited.

When the elastomer in the thermoplastic elastomer composition is dynamically vulcanized in this manner, the obtained resin film sheet becomes a sheet that includes a vulcanized elastomer; therefore, this sheet is preferable in that it has a resistance (elasticity) against deformation from the outside, maintains in particular recessed structures, and can reliably obtain the effects of the present invention.

Generally available rubber vulcanizers (crosslinking agents) can be used as the vulcanization agent. Specifically, as a sulfur-based vulcanizer, powdered sulfur, precipitated sulfur, highly dispersible sulfur, surface treated sulfur, insoluble sulfur, dimorpholine disulfide, alkylphenol disulfide, and the like can be illustrated, and, for example, about 0.5 to 4 phr (in the present specification, "phr" refers to parts by weight per 100 parts per weight of an elastomer component; same below) can be used.

Moreover, examples of an organic peroxide-based vulcanizer include benzoyl peroxide, t-butyl hydroperoxide, 2,4-dichlorobenzoyl peroxide, 2,5-dimethyl-2,5-di(t-butyl peroxy)hexane, and 2,5-dimethylhexane-2,5-di(peroxyl benzoate). Such an organic peroxide-based vulcanizer can be used in an amount of, for example, approximately 1 to 20 phr.

Furthermore, examples of a phenol resin-based vulcanizer includes brominated alkylphenol resins and mixed crosslinking system containing an alkyl phenol resin with a halogen donor such as tin chloride and chloroprene. Such a phenol resin-based vulcanizer can be used in an amount of, for example, approximately 1 to 20 phr.

As other examples, flowers of zinc (about 5 phr); magnesium oxide (about 4 phr); litharge (about 10 to 20 phr); p-quinone dioxime, p-dibenzoyl quinone dioxime, tetrachloro-p-benzoquinone, poly-p-dinitrosobenzene (about 2 to 10 phr); and methylenedianiline (about 0.2 to 10 phr) can be illustrated.

As necessary, a vulcanization accelerator may be added. As the vulcanization accelerator, about 0.5 to 2 phr, for exapmle, of a generally available vulcanization accelerator of an aldehyde-ammonia base, a guanidine base, a thiazole base, a sulfenamide base, a thiuram base, a dithio acid salt base, a thiourea base, or the like can be used.

Specific examples include an aldehyde ammonia vulcanization accelerator such as hexamethylene tetramine and the like; a guanidine vulcanization accelerator such as diphenyl guanidine and the like; a thiazole vulcanization accelerator such as dibenzothiazyl disulfide (DM), 2-mercaptobenzothiazole and its Zn salt; a cyclohexylamine salt, and the like; a sulfenamide vulcanization accelerator such as cyclohexyl benzothiazyl sulfenamide (CBS), N-oxydiethylene benzothiazyl-2-sulfenamide, N-t-butyl-2-benzothiazole sulfenamide, 2-(thymol polynyl dithio)benzothizole, and the like; a thiuram vulcanization accelerator such as tetramethylthiuram disulfide (TMTD), tetraethylthiuram disulfide, tetramethylthiuram monosulfide (TMTM), dipentamethylenethiuram tetrasulfide, and the like; a dithionate vulcanization accelerator such as Zn-dimethyl dithiocarbamate, Zn-diethyl dithiocarbamate, Zn-n-butyl dithiocarbamate, Zn-ethylphenyl dithiocarbamate, Te-diethyl dithiocarbamate, Cu-dimethyl dithiocarbamate, Fe-dimethyl dithiocarbamate, pipecoline pipecolyl dithiocarbamate, and the like; and a thiourea vulcanization accelerator such as ethylene thiourea, diethyl thiourea, and the like may be mentioned. Additionally, a vulcanization accelerator assistant which is generally-used for a rubber can be used. For example, zinc white (approximately 5 phr), stearic acid, oleic acid and their Zn salts (approximately 2 to 4 phr), or the like can be used.

The method for producing the thermoplastic elastomer composition is as follows. The thermoplastic resin and the elastomer (unvulcanized one in the case of rubber) are melt-kneaded in advance by a bi-axial kneader/extruder or the like. The elastomer is dispersed as a dispersion phase (domain) in the thermoplastic resin forming a continuous phase (matrix). When the elastomer is vulcanized, the vulcanizer can be added during the kneading process to dynamically vulcanize the elastomer. Although the various compounding agents (except for vulcanizer) may be added to the thermoplastic resin or the elastomer during the kneading process, it is preferable to premix the compounding agents before the kneading process. The kneader used for kneading the thermoplastic resin and the elastomer is not particularly limited. A screw extruder, kneader, Banbury Mixer, bi-axial kneader/extruder, or the like can be used as the kneader. Among these, a bi-axial kneader/extruder is preferably used for kneading the thermoplastic resin and the elastomer and for dynamically vulcanizing the elastomer. Furthermore, two or more types of kneaders can be used to successively knead the thermoplastic resin and the elastomer component. As a condition for the melt kneading, it is preferable that a temperature should equal to or higher than a melting temperature of the thermoplastic resin. Furthermore, a maximum shearing speed during the kneading process is preferably from 300 to 7,500 sec$^{-1}$. A total kneading time is from 30 seconds to 10 minutes. Additionally, when a vulcanizing agent is added, a vulcanization time after said addition is preferably from 15 seconds to 5 minutes. The polymer composition produced by the above method may be formed into a desired shape by a generally-used method for forming a thermoplastic resin such as injection molding and extrusion molding.

The thermoplastic elastomer composition thus obtained has a structure in which the elastomer is dispersed as a discontinuous phase in the matrix of the thermoplastic resin. By assuming this structure, when the sheet is used as the inner liner layer or the reinforcing layer, by the sufficient flexibility and the effect of the resin layer as the continuous phase, sufficient air permeation prevention or strength can be imparted therewith, and during molding, independent of the amount of the elastomer, the molding workability equivalent to the thermoplastic resin can be obtained.

The Young's moduli of the thermoplastic resin and the thermoplastic elastomer composition are not particularly limited, but are preferably set to 1 to 500 MPa, and more preferably 25 to 250 MPa.

EXAM PLES

The pneumatic tire of the present invention will be specifically described below by working examples and the like.

Note that evaluations of each test tire are performed by methods described below.

(Common items)

As the test tire, a tire of a size of 195/65R15 was manufactured. The resin film sheet material was the blend of the thermoplastic resin and the elastomer, the thickness thereof was 200 μm, and it was formed into the cylindrical shape by overlap joining (by thermal joining; a circumferential length of the overlap splice portion is 1.5 cm) both of the end portions thereof.

As respectively described below, with each working example and comparative example, a test of molding performance was performed; moreover, by assembling the resin film sheet material in the test tire, practical performances of when the material was used as the inner liner layer (FIG. 5A) or the reinforcing layer (sidewall portion [form of FIG. 5C]) were evaluated.

(Evaluation method of molding performance)

In a process of assembling the test tire above, tire members such as a carcass material, a sidewall, and a bead were assembled on the cylindrical resin film obtained above to assemble a first green tire; when assembling afterward a second green tire that assembles a belt and a tread, a maximum of about 50% of stretching in a circumferential direction was applied on the cylindrical film that includes the overlap splice portion. An inner surface of this second green tire was observed visually, and a presence or absence of a manufacturing failure such as peeling or a crack in the overlap splice portion or in a periphery thereof was confirmed. According to results, these were separated into "○ : good" and "× : bad".

(Evaluation method as inner liner layer)

The test tire above was applied with a load of 4.8 kN in an atmosphere of an air pressure of 150 kPa and 38°C and made to run on a metal drum for 30,000 km. After this running, the inner liner layer is observed, and those with the failure such as the crack generated in the periphery of the overlap splice portion are disqualified.

(Evaluation method as reinforcing layer)

The test tire above was applied with the load of 4.8 kN in the atmosphere of the air pressure of 150 kPa and 38°C and made to run on the metal drum for 30,000 km. After this running, the reinforcing layer was observed, and those with the failure such as the crack generated in the periphery of the overlap splice portion were disqualified.

(Comparative Examples 1 and 2; Working Examples 1 to 3)

Comparative Example 1

The recessed portions are not provided in particular in the resin sheet film.

Comparative Example 2

A plurality of through-holes (diameter of 5 mm) is provided in the resin film sheet on the tire outer circumferential side across the entire width in the tire width direction of the overlap splice portion (length in the tire circumferential direction is 15 mm). The through-holes are formed by using the laser light and slowing down the speed.

Working Example 1-3

As illustrated in FIGS. 1A and 1B, a plurality of recesses (diameter of 5 mm) of a cylindrical shape are provided in the resin film sheet on the tire outer circumferential side (carcass side) and/or the resin film sheet on the lumen side across the entire width in the tire width direction of the overlap splice portion (length in the tire circumferential direction is 15 mm).

When forming the end portions into the cylindrical shape by overlap splicing, the joining surfaces P of both layers are made to be the flat surfaces not provided with the recesses and the like.

The recesses of the cylindrical shape formed on the non-joining surfaces are processed using the laser light and formed by speeding up the laser light compared to the speed of Comparative Example 2.

Working Example 1 provides the recessed portions in the resin film sheet on the tire outer circumferential side (carcass side).

Working Example 2 provides the recessed portions in the resin film sheet on the tire lumen side.

Working Example 3 provides the recessed portions in both the resin film sheet on the tire outer circumferential side (carcass side) and the resin film sheet on the tire lumen side.

The evaluation results of each comparative example and each working example are shown in Table 1.

Table 1

| | Comparative Example 1 | Comparative Example 2 | Working Example 1 | Working Example 2 | Working Example 3 |
|---|---|---|---|---|---|
| Single layer thickness of resin film layer (%) | 0 | 100 | 100 | 100 | 100 |
| Recessed portion depth of carcass side sheet (%) | 0 | 100 (Through-hole) | 70 (Non-through hole) | 0 | 70 (Non-through hole) |
| Recessed portion surface area ratio of carcass side sheet (%) | 0 | 0 | 10 | 0 | 10 |
| Recessed portion depth of lumen side sheet (%) | 0 | 0 | 0 | 70 (Non-through hole) | 70 (Non-through hole) |
| Recessed portion surface area ratio of lumen side sheet (%) | 0 | 0 | 0 | 10 | 10 |
| Condition of splice portion when 50% stretched | × (Uneven stretching generated) | × (Tearing and peeling generated) | ○ (No peeling) | ○ (No peeling) | ○ (No peeling) |
| Evaluation as inner liner layer | × | Non-running (non-manufacturable) | ○ | ○ | ○ |
| Evaluation as reinforcing layer | × | Non-running (non-manufacturable) | ○ | ○ | ○ |

Reference numerals:

1 Resin film sheet material
2 Recessed portion
3 Recessed portion
4 Tread portion
5 Bead portion
6 Bead core
7 Inner liner
8a, 8b Belt layer
9 Bead filler
10 Carcass layer
11 Sidewall portion
P Joining surface of resin film sheet
S Overlap splice portion
T Pneumatic tire
Z Preferable location to provide splice portion having recessed portions

**Claims**

1. A pneumatic tire (T) comprising an inner liner (7) or a reinforcing layer made of a thermoplastic elastomer composition including a thermoplastic resin or a blend of a thermoplastic resin and an elastomer as a resin film sheet material (1) by making the thermoplastic elastomer composition into a sheet shape, comprising:

> an overlap splice portion (S) joined by overlapping the film sheet materials (1) on each other, and
> joining surface (P) sides of the two layers being formed into flat surfaces and the flat surfaces being joined,
>
> **characterized in that** at least one layer of two layers joined by overlapping the film sheet materials (1) in the overlap splice portion (S) having recessed portions (2, 3) of a depth D that is smaller than a thickness T of the film sheet material (1) on a non-joining surface side thereof.

2. The pneumatic tire (T) according to Claim 1, wherein
the depth D of the recessed portions (2, 3) and the thickness T of the film sheet material (1) are in a relation of formula (a) below:

$$0.01\ T \leq D < 1.0\ T...\quad \text{Formula (a)}$$

3. The pneumatic tire (T) according to Claim 1 or 2, wherein
a surface area S of the overlap splice portion (S) joined by overlapping the film sheet materials (1) each other and a total surface area A of the recessed portions (2, 3) on one surface are in a relation of formula (b) below:

$$0.01\ S \leq A \leq 1.0\ S...\quad \text{Formula (b)}$$

4. The pneumatic tire (T) according to any of Claims 1 to 3, wherein
the recessed portions (2, 3) are formed by a laser light irradiation process.

5. The pneumatic tire according to any of Claims 1 to 4, wherein the resin film sheet material (1) forms an inner liner (7).


**Patentansprüche**

1. Luftreifen (T), umfassend eine Innenseele (7) oder eine Verstärkungsschicht,
gefertigt aus einer thermoplastischen Elastomerzusammensetzung, einschließlich eines thermoplastischen Harzes oder eines Gemischs aus einem thermoplastischen Harz und einem Elastomer als ein Harzfolien-Flächengebildematerial (1) durch Fertigen der thermoplastischen Elastomerzusammensetzung in eine Flächengebildegestalt, umfassend:

> einen Überlappungspleißabschnitt (S), verbunden durch Überlappen der Folienflächengebildematerialien (1) miteinander, und
> Verbinden der Oberflächenseiten (P) der beiden Schichten, wobei diese zu flachen Oberflächen gebildet und die flachen Oberflächen verbunden werden,
> **dadurch gekennzeichnet, dass** mindestens eine Schicht der zwei durch Überlappen der Folienflächengebildematerialien (1) in dem Überlappungspleißabschnitt (S) verbundenen Schichten vertiefte Abschnitte (2, 3) einer Tiefe D aufweist, die geringer ist als eine Dicke T des Folienflächengebildematerials (1) auf einer nicht-verbundenen Oberflächenseite davon.

2. Luftreifen (T) nach Anspruch 1, wobei die Tiefe D der vertieften Abschnitte (2, 3) und die Dicke T des Folienflächengebildematerials (1) in einer Beziehung nach unten stehender Formel (a) zueinander stehen:

$$0,01\ T \leq D < 1,0\ T...\quad \text{Formel (a)}$$

3. Luftreifen (T) nach Anspruch 1 oder 2, wobei ein Oberflächenbereich S des durch das miteinander Überlappen des Folienflächengebildematerials (1) verbundenen Überlappungspleißabschnitts (S) und ein Gesamtoberflächenbereich A der vertieften Abschnitte (2, 3) auf einem Oberflächenbereich in einer Beziehung nach unten stehender Formel (b) zueinander stehen:

$$0,01\ S \leq A \leq 1,0\ S... \text{Formel (b)}$$

**4.** Luftreifen (T) nach einem der Ansprüche 1 bis 3, wobei die vertieften Abschnitte (2, 3) durch einen Laserlicht-Bestrahlungsprozess gebildet werden.

**5.** Luftreifen nach einem der Ansprüche 1 bis 4, wobei das Harzfolien-Flächengebildematerial (1) eine Innenseele (7) bildet.

**Revendications**

**1.** Bandage pneumatique (T) comprenant un revêtement interne (7) ou une couche de renfort constitué(e) d'une composition élastomère thermoplastique comprenant une résine thermoplastique ou un mélange d'une résine thermoplastique et d'un élastomère sous la forme d'un matériau de feuille de film en résine (1) par transformation de la composition élastomère thermoplastique en une forme de feuille, comprenant :

une partie coupe de chevauchement (S) reliée par chevauchement des matériaux de feuille de film (1) l'un sur l'autre et
des côtés de surface de jonction (P) des deux couches étant formés en des surfaces plates et les surfaces plates étant reliées,
**caractérisé en ce qu'au** moins une couche des deux couches reliées par chevauchement des matériaux de feuille de film (1) dans la partie coupe de chevauchement (S) a des parties évidées (2, 3) d'une profondeur D qui est inférieure à une épaisseur T du matériau de feuille de film (1) sur un côté de surface autre que de jonction, de celui-ci.

**2.** Bandage pneumatique (T) selon la revendication 1, dans lequel la profondeur D des parties évidées (2, 3) et l'épaisseur T du matériau de feuille de film (1) présentent une relation de formule (a) ci-dessous :

$$0,01\ T \leq D < 1,0\ T... \text{Formule (a)}$$

**3.** Bandage pneumatique (T) selon la revendication 1 ou 2, dans lequel une aire de surface S de la partie coupe de chevauchement (S) reliée par chevauchement des matériaux de feuille de film (A) l'un sur l'autre et une aire de surface totale A des parties évidées (2, 3) sur une surface présentent une relation de formule (b) ci-dessous :

$$0,01\ S \leq A \leq 1,0\ S... \text{Formule (b)}$$

**4.** Bandage pneumatique (T) selon l'une quelconque des revendications 1 à 3, dans lequel les parties évidées (2, 3) sont formées par un processus d'irradiation de lumière laser.

**5.** Bandage pneumatique selon l'une quelconque des revendications 1 à 4, dans lequel le matériau de feuille de film de résine (1) forme un revêtement interne (7).

D ←——→ D

FIG.1A

FIG.1B

FIG.2A

FIG.2B

FIG.2C

FIG.3

FIG.4

FIG.5A

FIG.5B

FIG.5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008308007 A